**Europäisches Patentamt**

**European Patent Office**

**Office européen des brevets**

(19)

(11) Numéro de publication : **0 025 046**
**B1**

(12) ## FASCICULE DE BREVET EUROPÉEN

(45) Date de publication du fascicule du brevet :
**11.05.83**

(51) Int. Cl.³ : **A 63 C 7/10**

(21) Numéro de dépôt : **80900492.2**

(22) Date de dépôt : **20.03.80**

(86) Numéro de dépôt international :
**PCT/FR 80/00041**

(87) Numéro de publication internationale :
**WO WO/80019 (02.10.80 Gazettee 80/22)**

(54) **FREIN A SKI RETRACTABLE.**

(30) Priorité : **20.03.79 FR 7906951**

(43) Date de publication de la demande :
**18.03.81 Bulletin 81/11**

(45) Mention de la délivrance du brevet :
**11.05.83 Bulletin 83/19**

(84) Etats contractants désignés :
**AT CH DE**

(56) Documents cités :
**FR A 2 318 658**
**FR A 2 388 572**
**FR A 2 388 573**
**FR A 2 400 374**
**FR A 2 409 061**

(73) Titulaire : **Sté. Look Société Anonyme**
**B. P. 72 Rue de la Pique**
**F-58004 Nevers Cedex (FR)**

(72) Inventeur : **BEYL, Jean Joseph Alfred**
**10, boulevard Victor-Hugo**
**F-58000 Nevers (FR)**

(74) Mandataire : **Tony-Durand, Serge**
**Cabinet Tony-Durand 22, Boulevard Voltaire**
**F-75011 Paris (FR)**

Frein à ski rétractable

La présente invention concerne un frein à ski dont les patins de freinage sont rétractés en position d'escamotage de façon à ne pas déborder sur les côtés du ski.

Les freins à ski les plus répandus sont constitués par deux bras pivotants de freinage disposés de part et d'autre du ski et montés articulés sur celui-ci, autour d'un axe transversal. A l'une de leurs extrémités, ces deux bras sont réunis par une traverse servant de pédale de manœuvre, cependant qu'un ressort de rappel tend constamment à faire pivoter ces bras dans leur position pour laquelle les extrémités opposées de ceux-ci se trouvent abaissées par rapport à la face inférieure du ski, de façon à pénétrer dans la neige. Les freins à ski de ce genre sont en général fabriqués en fil métallique et l'axe transversal de pivotement peut alors être constitué par deux coudes formés dans l'un et l'autre des deux bras pivotants.

Lorsque la chaussure est en place sur le ski, celle-ci fait pression sur la pédale de manœuvre, ce qui maintient la partie active des bras de freinage en position relevée d'escamotage. Cependant, la partie active de ces bras fait alors saillie par rapport aux chants latéraux du ski, ce qui dans certaines circonstances peut constituer un inconvénient.

C'est pourquoi, certains freins à ski sont conçus de façon que les parties actives de leurs bras pivotants se trouvent rapprochées l'une de l'autre au-dessus du ski lorsqu'elles sont en position relevée d'escamotage. Différents systèmes ont été prévus pour obtenir la rétraction des bras pivotants dans cette position.

Ainsi, dans le brevet français FR-A-2 272 695, la rétraction des bras de freinage est obtenue par mise sous tension du fil métallique constituant ceux-ci et ce au moyen d'un dispositif d'étirage constitué par une sorte de genouillère destinée à être aplatie par la pression de la chaussure. Cependant, le fonctionnement d'un tel système est incertain, car il est nécessaire d'exercer une force élevée pour déformer le fil constituant les bras de freinage. En effet, ce fil doit par ailleurs être assez rigide pour permettre un freinage efficace et pour éviter que les bras de freinage puissent se déformer sous l'effet de simples chocs.

Dans le brevet français FR-A-2 308 389, la rétraction des bras de freinage en position relevée est obtenue par pression sur une plaquette déformable ou quadrilatère articulé, disposé sous l'emplacement de la chaussure de façon à être aplatie par celle-ci lors de sa mise en place. L'agencement est tel que l'aplatissement de cette plaquette ou de ce quadrilatère articulé provoque alors le rapprochement des deux bras de freinage, après que ceux-ci aient été relevés en position d'escamotage.

Cependant, si la plaquette de commande est une lame cintrée, celle-ci exerce une pression élevée sous la chaussure. Or, ceci est de nature à perturber les conditions de libération de la chaussure lors du déclenchement de la fixation de retenue de celle-ci sur le ski. Par ailleurs, si la plaquette de commande consiste en un quadrilatère articulé, le système prévu est particulièrement compliqué et coûteux. De plus, celui-ci est peu fiable d'autant plus que son fonctionnement est sensible au gel.

Dans le brevet français FR-A-2 330 419, la rétraction des bras de freinage est obtenue par l'action d'une ou plusieurs rampes pouvant être portées par une pédale auxiliaire. Mais, là encore, les solutions prévues ne donnent pas satisfaction. En effet, la rétraction des bras étant obtenue par déformation du fil qui les constitue, il est nécessaire d'exercer une force très élevée à cet effet. De plus, ce système crée également des contraintes parasites perturbant les conditions de libération de la chaussure en cas de déclenchement de la fixation.

D'autre part, pour éviter un trop grand encombrement, il est nécessaire de limiter la hauteur des rampes de commande, ce qui par conséquent limite l'amplitude de rétraction des bras de freinage.

Selon une autre solution encore, la rétraction d'un bras de freinage peut être obtenue en faisant pivoter celui-ci dans un palier dont l'axe, situé dans un plan transversal au ski, est incliné par rapport à la face supérieure de celui-ci (figure 11 du brevet FR-A-2 228 506). Un tel système a l'avantage d'être extrêmement simple. Mais par contre, il a pour inconvénient que la moindre déformation du bras de freinage peut provoquer son frottement et éventuellement son blocage sur la tranche du ski, puisque la rétraction du bras s'effectue en même temps que son relevage. Un autre inconvénient réside dans le fait que pour obtenir une rétraction suffisamment importante, il est nécessaire que le palier d'articulation soit situé relativement haut, ce qui est inacceptable si le frein est placé sous la chaussure.

En conséquence, les divers systèmes proposés jusqu'ici pour réaliser la rétraction des bras de freinage présentent tous des inconvénients importants. C'est la raison pour laquelle la présente invention a pour but de réaliser un frein à ski dans lequel la rétraction des bras de freinage est obtenue au moyen d'un système simple, fiable et peu coûteux, ce système étant par ailleurs facile à manœuvrer et exerçant sous la chaussure une poussée parasite négligeable.

Ce frein à ski est essentiellement caractérisé en ce que sa pédale de commande s'articule sur des extensions coudées des extrémités correspondantes des bras pivotants, et comporte, à cet effet, des paliers dans lesquels ces extensions peuvent tourillonner, et en ce que, lorsque les bras pivotants sont en position d'escamotage au-dessus du ski et que la pédale est elle-même appliquée sur celui-ci, les axes de ces paliers de même que les extensions coudées des bras pivotants forment un angle obtus dont le sommet est tourné du côté opposé aux parties actives des bras pivotants. Par ailleurs, la forme de ces derniers est telle que leurs parties actives se trouvent alors en retrait par rapport aux côtés du ski.

Selon une autre caractéristique, il est prévu des moyens élastiques de rappel agissant sur la pédale de commande pour provoquer son relèvement dès que celle-ci n'est plus soumise à la pression exercée par la chaussure correspondante. Eventuellement, ces moyens de rappel peuvent constituer en même temps les moyens de rappel des bras de freinage dans leur position de travail.

L'agencement prévu permet d'obtenir la variation d'écartement des parties actives des bras de freinage, et par suite, leur rétraction en position d'escamotage, sous l'effet du pivotement relatif de la pédale de commande par rapport à ces bras. Ainsi, lorsque ces bras sont escamotés et que la pédale est appliquée contre le ski, les parties actives de ces bras sont maintenues en retrait par rapport aux côtés du ski. Par contre, le relèvement de la pédale, lors du départ de la chaussure, commande automatiquement un écartement suffisant des parties actives de ces bras pour que celles-ci puissent passer librement de part et d'autre du ski.

Du reste, les détails du fonctionnement du frein selon l'invention apparaîtront au cours de la description suivante. Cette description est donnée en référence aux dessins annexés à simple titre indicatif, et dans lesquels :

Les figures 1, 2 et 3 sont des vues en perspective du frein selon l'invention, celui-ci étant représenté respectivement en position active de freinage, en position intermédiaire de simple relèvement des bras de freinage, et enfin, en position complète d'escamotage de ceux-ci ;

Les figures 4 et 5 sont des vues en plan de dessus correspondant respectivement aux figures 2 et 3 ;

La figure 6 est une vue en coupe transversale selon la ligne VI-VI de la figure 2, et qui correspond donc à la position de relèvement des parties actives des bras de freinage avant escamotage complet de celles-ci ;

La figure 7 est une vue en perspective d'une autre forme de réalisation du frein à ski selon l'invention.

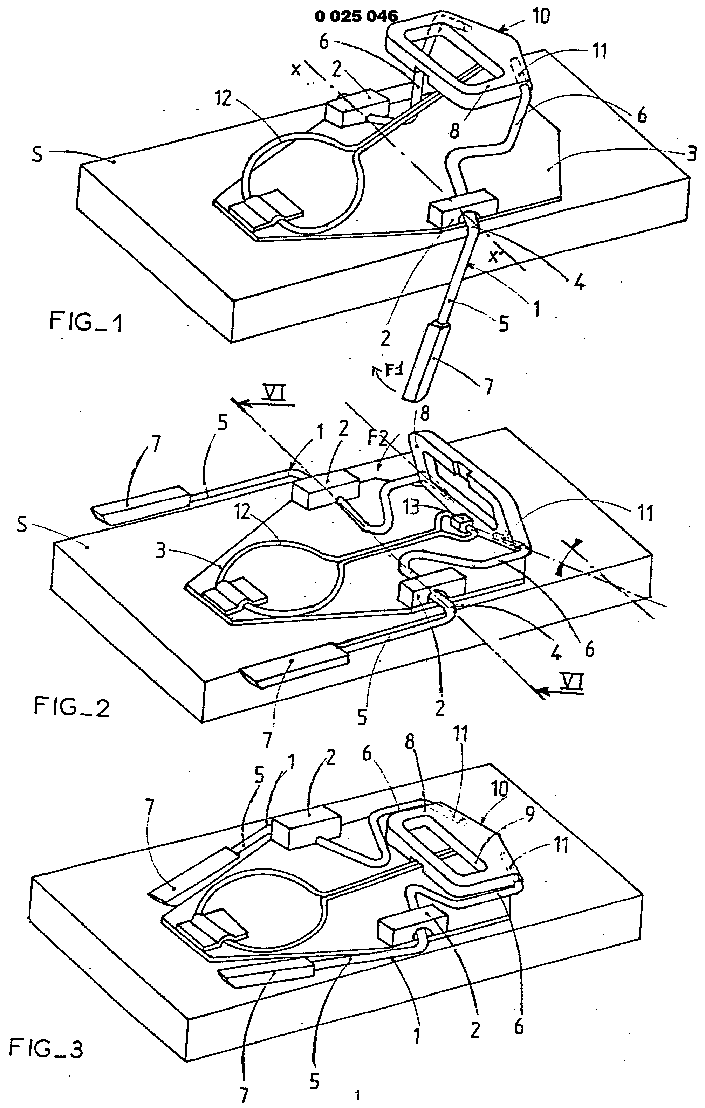

Le frein à ski représenté aux figures 1 à 6 comporte deux bras pivotants 1 en fil métallique rigide, qui sont destinés à être disposés sur l'un et l'autre côtés du ski correspondant S. Ces bras sont montés articulés dans deux paliers 2, portés par une platine de montage 3 destinée à être fixée sur le dessus du ski dans une position telle que l'axe xx' de ces deux paliers s'étende transversalement à l'axe de celui-ci.

Les deux bras pivotants 1 sont symétriques et l'axe de pivotement de chacun d'eux est constitué par une partie coudée 4, engagée à l'intérieur du palier 2 correspondant. A ce sujet, il convient de noter que ces derniers sont agencés de manière que les axes 4 aient une certaine liberté de débattement à l'intérieur de ceux-ci.

L'axe de pivotement 4 de chaque bras délimite en quelque sorte dans celui-ci deux parties distinctes, à savoir une partie active 5 destinée à pénétrer dans la neige en position de travail et une partie de manœuvre 6 destinée à être actionnée par la chaussure correspondante lors de la mise en place de celle-ci. Du fait de leur possibilité de pivotement, les deux bras 1 peuvent occuper deux positions extrêmes différentes, à savoir une position d'attente dans laquelle les parties actives 5 de ceux-ci sont escamotées au-dessus du ski et une autre position de travail dans laquelle ces mêmes parties font saillie au-dessous de la surface inférieure du ski (voir figure 1). De préférence, les extrémités de parties actives des bras de freinage portent des patins destinés à pénétrer dans la neige pour accroître l'efficacité du freinage.

Les parties de manœuvre 6 des bras de freinage portent une pédale de commande 8 qui est le seul élément de liaison entre celles-ci. Cette pédale peut consister en une plaque métallique d'une certaine épaisseur présentant avantageusement une large ouverture 9 ayant pour fonction d'éviter que de la neige puisse éventuellement être coincée entre le ski et cette pédale, lors du rabattement de cette dernière contre celui-ci. Près de son bord 10 tourné du côté opposé aux patins de freinage 7, la pédale 8 s'articule sur des extensions coudées 11 des extrémités correspondantes des deux bras de freinage. A cet effet, des alésages sont ménagés dans l'épaisseur de la pédale 8 pour constituer des paliers dans lesquels peuvent tourillonner les extensions coudées 11 des bras de freinage.

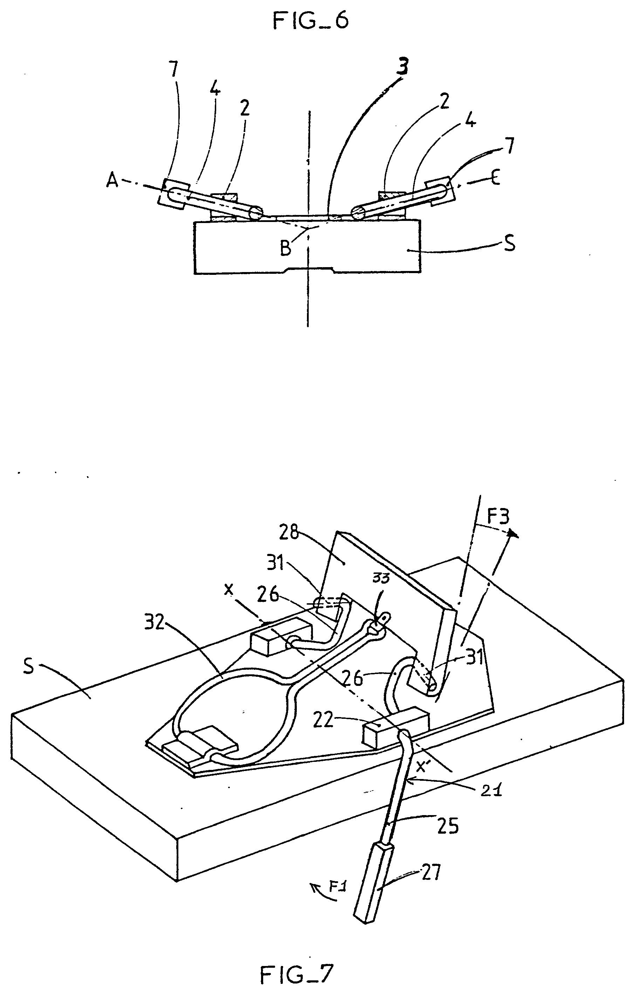

Selon une caractéristique essentielle du frein selon l'invention, les axes de ces paliers, de même que ceux des extensions 11 des bras pivotants, forment entre eux un angle obtus $\beta$, lorsque les bras pivotants sont escamotés au-dessus du ski et que la pédale de commande est elle-même appliquée à plat sur celui-ci (voir figure 5). La valeur de cet angle peut être comprise entre 120° et 170° et elle peut être par exemple de 150°. Le sommet O de cet angle est tourné du côté opposé aux patins de freinage 7. Par ailleurs, la forme des bras pivotants de freinage est telle que, dans cette position d'escamotage complet du frein, l'écart $e1$ entre les extrémités des patins de freinage présente une valeur minimum, de façon que ces derniers se trouvent en retrait par rapport aux côtés du ski.

Enfin, un ressort de traction 12, dont une extrémité s'articule sur l'embase 3, est attaché à son extrémité opposée sur la pédale 8 et ce en un point 13 situé sur la face inférieure de celle-ci près de son bord 9 tourné du côté opposé aux patins de freinage 7. Ainsi, ce ressort tend à provoquer le soulèvement de la pédale 8 par rapport au ski dès que la chaussure correspondante cesse d'exercer une pression sur celle-ci, ce soulèvement s'effectuant par pivotement de cette pédale autour des extensions coudées 11 des bras de freinage. Cependant, ce ressort tend également à assurer le pivotement de ces derniers vers leur position de travail.

Dans l'exemple représenté, le ressort de rappel ainsi prévu consiste en une boucle déformable en fil métallique élastique. Cependant, ce ressort pourrait être remplacé par tout autre moyen élastique de rappel approprié. Eventuellement, il serait possible de prévoir deux séries distinctes de moyens élastiques de rappel, les uns agissant sur les bras pivotants et les autres uniquement sur la pédale de commande.

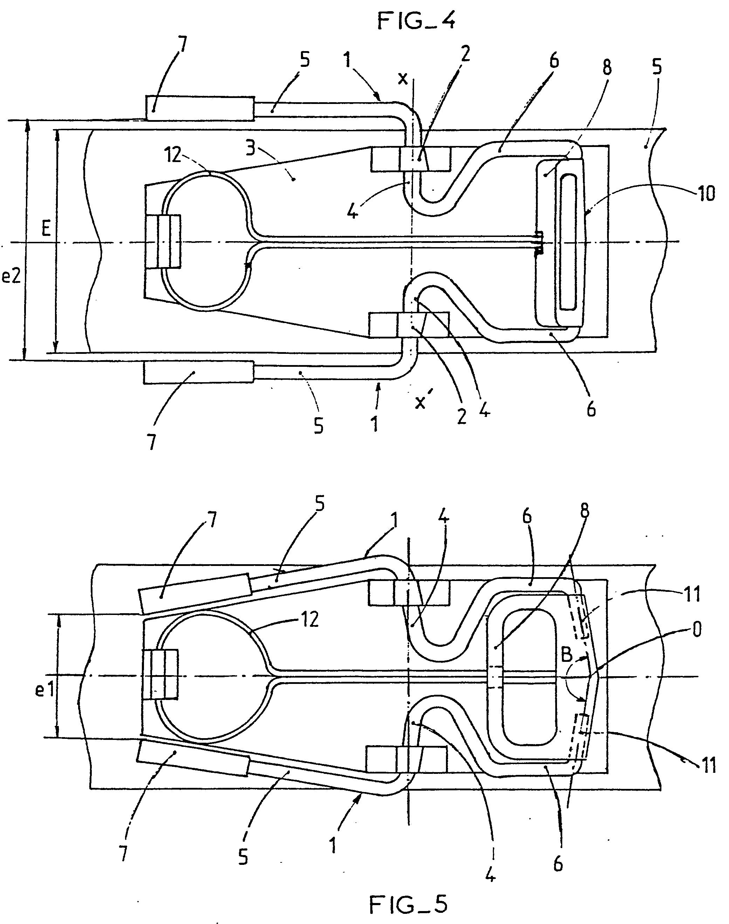

Grâce à l'agencement prévu, le relèvement de la pédale de commande 8 dès le retrait de la chaussure a pour effet de provoquer un mouvement particulier des deux bras de freinage l'un par rapport à l'autre qui s'accompagne d'un accroissement, de l'écartement existant entre les patins de freinage. Cet écartement atteint ainsi une valeur $e2$ légèrement supérieure à la largeur E du ski (voir figure 4), de sorte que les patins de freinage peuvent librement passer de part et d'autre du ski lorsque les bras de freinage pivotent vers leur position de travail par articulation à l'intérieur des paliers 2.

Lors de la mise en place d'une chaussure, il se produit un fonctionnement inverse. En effet, la pression exercée par celle-ci sur les extrémités 11 des bras de freinage tend tout d'abord à faire pivoter ceux-ci dans le sens de la flèche F1 jusque dans une position pour laquelle leur patin de freinage se trouve amené au-dessus du niveau de la surface supérieure du ski. Il s'agit de la position intermédiaire de simple relèvement des patins de freinage qui est illustrée aux figures 2 et 4.

Dans cette position, les patins de freinage 7 présentent un écart $e2$ qui est légèrement supérieur à la largeur E du ski, cependant que la pédale de commande 8 est encore soulevée par rapport au ski (voir figure 2). Mais, l'application de la chaussure contre le ski provoque ensuite le rabattement de cette pédale contre celui-ci par pivotement selon la flèche F2 sur les extensions coudées 11 des bras de freinage et ceci impartit à ces derniers, un mouvement particulier inverse de celui décrit précédemment. Celui-ci a pour effet d'assurer le rapprochement des patins de freinage 7 l'un de l'autre, au-dessus de la surface du ski. Comme on peut le constater lors de l'escamotage de l'ensemble, la pédale 8 est amenée à pivoter en sens inverse du sens de pivotement des bras de freinage.

Finalement, lorsque la pédale 8 est à nouveau appliquée contre le ski dans la position illustrée aux figures 3 et 5, l'écartement des patins de freinage 7 est réduit à la valeur minimum $e1$, de sorte que ces derniers se trouvent en retrait par rapport aux côtés du ski.

Le mouvement particulier imparti aux bras de freinage par le pivotement de la pédale de commande, dans un sens et dans l'autre, est évidemment dû à l'inclinaison prévue pour les extensions coudées 11 de ces bras et pour les axes des paliers ménagés à l'intérieur de la pédale de commande.

En effet, grâce à cette inclinaison, les patins de freinage des bras pivotants présentent un écart minimum $e1$ dans la position illustrée à la figure 5. Mais, dans l'hypothèse tout à fait théorique où la pédale de commande 8 pourrait occuper la position inverse dans laquelle elle serait à nouveau appliquée à plat contre le ski, les bras de freinage présenteraient alors un écartement maximum. Entre ces deux positions extrêmes de la pédale de commande, l'écart entre les patins de freinage varie donc constamment en fonction de la valeur de l'angle de la pédale de commande par rapport aux plans formés par les bras de freinage.

A ce sujet, il convient également de noter que c'est uniquement dans l'une et l'autre de ces deux positions extrêmes de la pédale de commande que les plans contenant les deux bras de freinage se trouvent confondus et sont disposés parallèlement à la surface supérieure du ski. En effet, entre ces deux positions extrêmes, les plans A-B et B-C contenant ces deux bras sont concourants et ils forment un dièdre dont l'ouverture est tournée vers le haut (voir figure 6), cependant que son arête s'étend parallèlement à l'axe longitudinal du ski. Or, l'angle intérieur de ce dièdre varie constamment en fonction de la position angulaire de la pédale de commande par rapport aux bras de freinage.

En effet, la rotation complète de cette pédale sur elle-même aurait pour effet de faire déplacer l'extension coudée 11 de chaque bras de freinage selon les génératrices d'un cône. Mais dans le cas présent, seule une partie limitée de ce mouvement est mise à profit pour obtenir la variation de l'écartement existant entre les patins de freinage 7.

Il faut observer que dans la position d'escamotage complet du frein, le ressort de rappel 12 est très proche de la surface supérieure du ski. Dans ces conditions, l'effort parasite s'exerçant sur la chaussure est alors pratiquement nul. Cependant, le principal avantage du présent frein réside dans la simplicité de structure et de fonctionnement de celui-ci, ainsi que dans la fiabilité de son fonctionnement. Par ailleurs, du fait même de sa simplicité de structure, ce frein est extrêmement peu coûteux.

De préférence, le frein à ski selon l'invention est destiné à être monté sur un ski entre les éléments avant et arrière de la fixation de retenue d'une chaussure. Certaines parties de ce frein, notamment sa pédale de commande, peuvent être garnies d'éléments anti-friction en polytétrafluoréthylène destinés à faciliter le glissement de la chaussure lors de sa libération. Cependant, le frein selon l'invention pourrait également être intégré à la fixation de retenue de la chaussure.

La figure 7 représente une autre forme de réalisation du frein à ski selon l'invention. Dans celle-ci, l'agencement prévu est tel que la pédale de commande correspondante 28 pivote dans le même sens que les bras de freinage 21 lors de l'escamotage de ces derniers.

Dans ce but, la position des axes d'articulation de cette pédale est inversée par rapport à celle prévue dans la précédente forme de réalisation. En effet, les logements pratiqués dans cette pédale, pour recevoir les extensions coudées 31 des parties de manœuvre 26 des bras de freinage correspondants 21, sont disposées près de son bord tourné du même côté que les patins de freinage 27.

Dans ces conditions, lorsqu'une chaussure est appliquée sur ce frein, la pédale de commande 28 est amenée à pivoter dans le sens de la flèche F3, c'est-à-dire dans le même sens que les bras de freinage.

Cependant, l'agencement du présent frein est par ailleurs le même que précédemment. En effet, les extensions coudées 31 des bras de freinage forment entre elles un angle obtus dont le sommet est dirigé du côté opposé aux patins de freinage 27. De ce fait, le rabattement de la pédale 28 contre le ski provoque, comme précédemment, le rapprochement des patins de freinage 27 au-dessus du ski après que ceux-ci aient été amenés au-dessus du niveau de la face supérieure de celui-ci.

Bien entendu, le pivotement de la pédale 28 en sens inverse, sous l'effet du ressort de rappel correspondant 32 attaché en 33 sur cette pédale, provoque l'écartement des patins de freinage 27 qui peuvent ainsi passer librement de part et d'autre du ski pour venir dans leur position de travail.

**Revendications**

1. Frein à ski comportant deux bras pivotants (1, 21) destinés à être disposés sur l'un et l'autre côtés du ski (S) et dont une de leurs extrémités constituant la partie active (5, 25) porte un patin de freinage (7, 27) et peut se déplacer entre une position abaissée de freinage et une position relevée d'escamotage, ces bras comportant par ailleurs des parties coudées (4) traversant des paliers (2, 22) disposés en alignement transversal (XX') sur le ski dans lesquels ils peuvent pivoter avec une certaine liberté de débattement angulaire dans le plan du ski et de déplacement dans le sens transversal, cependant que les autres extrémités (6, 26) des bras (1, 21), opposées aux parties actives et disposées symétriquement au-dessus du ski, portent une pédale de commande (8, 28) et sont soumises à l'action de moyens élastiques de rappel tendant à faire pivoter ces bras (1, 21) dans leur position de freinage, caractérisé en ce que la pédale de commande (8, 28) s'articule uniquement sur des extensions coudées (11, 31) des extrémités (6, 26) des bras pivotants (1, 21), et elle comporte à cet effet des paliers dans lesquels ces extensions (11, 31) peuvent tourillonner, et en ce que, lorsque les bras pivotants (1, 21) sont en position d'escamotage au-dessus du ski et que la pédale (8, 28) est elle-même appliquée sur celui-ci, les axes de ces paliers de même que les extensions coudées (11, 31) des bras pivotants (1, 21) forment un angle obtus (B) dont le sommet est tourné du côté opposé aux parties actives (5, 25) des bras pivotants, la forme de ces derniers étant par ailleurs telle que leurs parties actives (5, 25) se trouvent alors en retrait par rapport aux côtés du ski sous l'effet du pivotement relatif de la pédale par rapport aux bras.

2. Frein à ski selon la revendication 1, caractérisé en ce qu'il est prévu des moyens élastiques (12, 32) de rappel agissant sur la pédale de commande (8, 28) pour provoquer son relèvement dès que celle-ci n'est plus soumise à la pression d'une chaussure.

3. Frein à ski selon la revendication 2, caractérisé en ce que les moyens élastiques de rappel (12, 32) agissant sur la pédale de commande (8, 28) tendent également à assurer le pivotement des bras pivotants (1, 21) dans leur position de freinage.

4. Frein à ski selon l'une des revendications 1 à 3, caractérisé en ce que les paliers d'articulation prévus sur la pédale de commande (8) sont situés près du bord (10) de celle-ci qui est tourné du côté opposé aux parties actives (5) des bras pivotants (1), cette pédale (8) pivotant en sens inverse de ces derniers lors de l'escamotage de l'ensemble contre le ski.

5. Frein à ski selon l'une des revendications 1 à 3, caractérisé en ce que les paliers d'articulation prévus sur la pédale de commande (28) sont situés près du bord de celle-ci qui est tourné du côté des parties actives (25) des bras pivotants (21), cette pédale (28) pivotant dans le même sens que ces derniers lors de l'escamotage de l'ensemble contre le ski.

6. Frein à ski selon l'une des revendications précédentes, caractérisé en ce que la pédale de commande (8, 28) consiste en une plaque dans l'épaisseur de laquelle sont ménagés les paliers de tourillonnement des extensions coudées (11, 31) des bras pivotants (1, 21).

7. Frein à ski selon l'une des revendications précédentes, caractérisé en ce que l'angle obtus (B) formé par les extensions coudées (11, 31) des bras pivotants (1, 21), lorsque ceux-ci sont complètement escamotés et que la pédale (8, 28) est appliquée sur le ski, présente une valeur comprise entre 120° et 170°, cette valeur étant de préférence de 150°.

**Claims**

1. Ski brake comprising two pivotal arms (1, 21) which are intended to be placed on each side of the ski (S) and one arm extremity constituting the active portion (5, 25) carries a braking shoe (7, 27) and is capable of displacement between a lowered braking position and a raised position of withdrawal, these arms being also provided with elbowed portions (4) passed through bearings (2, 22) disposed in transverse alignment (X-X') on the ski, in which they are capable of pivoting with a certain freedom of angular travel in the plane of the ski and of displacement in the transverse direction whilst the other extremities (6, 26) of the arms (1, 21) opposite to the active portions and disposed symmetrically above the ski carry an operating pedal (8, 28) and are subjected to the action of elastic restoring means which tend to cause pivotal displacement of these arms (1, 21) to their braking position, characterized in that the operating pedal (8, 28) is pivotally attached solely to elbowed extensions (11, 31) of the extremities (6, 26) of the pivotal arms (1, 21) and is provided for this purpose with bearings in which these extensions (11, 31) are pivotally mounted, and that, when the pivotal arms (1, 21) are in the withdrawn position above the ski and when the pedal (8, 28) itself is applied against this latter, the axes of these bearings as well as the elbowed extensions (11, 31) of the pivotal arms (1, 21) form an obtuse angle (B), the vertex of which is directed away from the active portions (5, 25) of the pivotal arms, the shape of these latter being also such that their active portions (5, 25) are then set back with respect to the sides of the ski under the action of the relative pivotal movement of the pedal with respect to the arms.

2. Ski brake in accordance with claim 1, characterized in that provision is made for elastic restoring means (12, 32) which produce action on the operating pedal (8, 28) in order to cause its upward withdrawal as soon as this latter is no longer subjected to the pressure of a boot.

3. Ski brake in accordance with claim 2, characterized in that the elastic restoring means (12, 32) for producing action on the operating pedal (8, 28) also tend to ensure pivotal displacement of the pivotal arms (1, 21) to their braking position.

4. Ski brake in accordance with any one of claims 1 to 3, characterized in that the swivel-bearings provided on the operating pedal (8) are located near that edge (10) of this latter which is directed away from the active portions (5) of the pivotal arms (1), this pedal being pivotally displaced in the direction opposite to this latter at the time of withdrawal of the assembly against the ski.

5. Ski brake in accordance with any one of claims 1 to 3, characterized in that the swivel-bearings provided on the operating pedal (28) are located near that edge of this latter which is directed towards the active portions (25) of the pivotal arms (21); this pedal (28) pivots in the same direction as these latter at the time of withdrawal of the assembly against the ski.

6. Ski brake in accordance with any one of the preceding claims, characterized in that the operating pedal (8, 28) consists of a plate, the bearings for the rotation of the elbowed extensions (11, 31) of the pivotal arms (1, 21) being formed within the thickness of the plate.

7. Ski brake in accordance with any one of the preceding claims, characterized in that the obtuse angle (B) formed by the elbowed extensions (11, 31) of the pivotal arms (1, 21), when these latter are completely withdrawn and when the pedal (8, 28) is applied against the ski, has a value within the range of 120° to 170°, this value being preferably 150°.

## Ansprüche

1. Skibremse mit zwei beiderseits des Skis (S) vorzusehenden Schwenkarmen (1, 21), die einen Bremsschuh (7, 27) an ihrem einen, den wirkenden Teil bildenden Ende (5, 25) tragen, das sich aus einer abgesenkten Bremsstellung in eine angehobene Einklappstellung und zurück bewegen läßt, welche Arme außerdem abgewinkelte Teile (4) aufweisen, die durch in Richtung einer Querachse (XX') auf dem Ski fluchtende Lager (2, 22) verlaufen, in denen sie sich mit einem gewissen Winkelspiel in der Skiebene bewegen und drehen und in Querrichtung verschieben lassen, während die anderen, den wirkenden Teilen entgegengesetzten und symmetrisch oberhalb des Skis angeordneten Enden (6, 26) der Arme (1, 21) ein Betätigungspedal (8, 28) tragen und unter der Wirkung einer federnden Rückholeinrichtung stehen, die die Arme (1, 21) in ihre Bremsstellung zu schwenken sucht, dadurch gekennzeichnet, daß das Betätigungspedal (8, 28) allein an abgewinkelte Fortsätze (11, 31) der Enden (6, 26) der Schwenkarme (1, 21) angelenkt ist und dazu Lager aufweist, in denen sich die Fortsätze (11, 31) drehen können, und daß, wenn die Schwenkarme (1, 21) sich in der Einklappstellung oberhalb des Skis befinden und das Pedal (8, 28) selbst auf dem Ski aufliegt, die Achsen dieser Lager sowie die abgewinkelten Fortsätze (11, 31) der Schwenkarme (1, 21) einen stumpfen Winkel (B) bilden, dessen Spitze von den wirkenden Teilen (5, 25) der Schwenkarme abgewandt ist, wobei diese Schwenkarme außerdem eine solche Form haben, daß ihre wirkenden Teile (5, 25) unter dem Einfluß der Drehung des Pedals relativ zu den Armen gegenüber den Skikanten zurückgenommen sind.

2. Skibremse nach Anspruch 1, dadurch gekennzeichnet, daß eine federnde Rückholeinrichtung (12, 32) vorgesehen ist, die das Betätigungspedal (8, 28) beeinflußt und dieses sich wieder aufrichten läßt, sobald die Belastung durch einen Skistiefel aufgehoben wird.

3. Skibremse nach Anspruch 2, dadurch gekennzeichnet, daß die das Betätigungspedal (8, 28) beeinflussende federnde Rückholeinrichtung (12, 32) auch die Schwenkarme (1, 21) in ihrer Bremsstellung zu halten sucht.

4. Skibremse nach einem der Ansprüche 1 bis 3, dadurch gekennzeichnet, daß die an dem Betätigungspedal (8) vorgesehenen Anlenklager sich in der Nähe des den wirkenden Teilen (5) der Schwenkarme (1) abgewandten Rande (10) des Pedals befinden, und daß das Pedal (8) bei dem Einklappen der Anordnung auf die Ski sich in entgegengesetzter Richtung dreht wie die Schwenkarme (1).

5. Skibremse nach einem der Ansprüche 1 bis 3, dadurch gekennzeichnet, daß die an dem Betätigungspedal (28) vorgesehenen Anlenklager sich in der Nähe des den wirkenden Teilen (25) der Schwenkarme (21) zugewandten Rande des Pedals befinden, und daß das Pedal (28) bei dem Einklappen der Anordnung auf die Ski sich in der gleichen Richtung dreht wie die Schwenkarme (21).

6. Skibremse nach einem der vorhergehenden Ansprüche, dadurch gekennzeichnet, daß das Betätigungspedal (8, 28) aus einer Platte besteht, in die Drehlager für die abgewinkelten Fortsätze (11, 31) der Schwenkarme (1, 21) geschnitten sind.

7. Skibremse nach einem der vorhergehenden Ansprüche, dadurch gekennzeichnet, daß der zwischen den abgewinkelten Fortsätzen (11, 31) der Schwenkarme (1, 21) gebildete stumpfe Winkel (B), wenn die Schwenkarme vollständig eingeklappt sind und das Pedal (8, 28) auf den Ski gedrückt ist, eine Öffnung zwischen 120° und 170°, vorzugsweise von 150° hat.

**0 025 046**

FIG_1

FIG_2

FIG_3

FIG_4

FIG_5

2

## FIG_6

## FIG_7